# EUROPÄISCHE PATENTANMELDUNG

(11) **EP 0 971 300 A1**
(43) Veröffentlichungstag der Anmeldung: **12.01.2000**
(21) Anmeldenummer: 99109669.4
(22) Anmeldetag: 17.05.1999
(51) Int. Cl.: G06F 17/60, H04L 12/28

(54) **Verfahren zum Versorgen von Abteilungen eines Selbstbedienungs-(SB-)Marktes mit produktbezogenen Informationen**

(30) Priorität: 17.05.1998 DE 19821966
(71) Anmelder: systec POS-Technology GmbH, 82178 Puchheim (DE)
(72) Erfinder: Sonnendorfer, Horst, 82178 Puchheim (DE); Wieth, Franz, 82178 Puchheim (DE)
(74) Vertreter: von Kirschbaum, Albrecht, Dipl.-Ing.

(57) **Zusammenfassung**

Zum Versorgen von Abteilungen eines mit einer Vielzahl Einkaufswagen bestückten SB-Marktes mit produktbezogenen Informationen wird von mindestens einer zentralen Sendeeinheit (13; 13') des SB-Marktes (1) in den SB-Markt (1) eine Datenmenge drahtlos übertragen, welche im wesentlichen aus für dessen Abteilungen (10₁ bis 10ₘ) bestimmten, produktbezogenen Informationen und aus den jeweiligen lokalen Sende/Empfangseinheiten (15₁ bis 15ₙ) zugeteilten Kennungscodes gebildet ist. Aus der Datenmenge wird (werden) mittels einer lokalen Sende/Empfangseinheit (15₁ bis 15ₙ) der jeweiligen Abteilung des SB-Marktes (13; 13₁) zugeordneten Empfangs/Sendeeinheit (16₁ bis 16ₘ) anhand des zugeteilten Kennungscodes die entsprechende(n), produktbezogene(n) Information(en) ausgewählt. Die produktbezogene(n) Information(en) wird (werden) in der jeweiligen, lokalen Sende/Empfangseinheit (15₁ bis 15ₙ) gespeichert und in der Weise bereitgehalten, daß bei Eintreffen eines Einkaufswagens in einer Abteilung (10) produktbezogene(n) Information(en) über eine definierte Übertragungsstrecke an eine an dem Einkaufswagen vorgesehene Empfangs/Sendeeinheit mit Wiedergabeeinrichtung übertragen und dort wiedergegeben wird (werden).

## Beschreibung

Die Erfindung betrifft ein Verfahren zum Versorgen von mit unterschiedlichen Produktgruppen ausgestatteten Abteilungen eines mit einer Vielzahl Einkaufswagen bestückten Selbstbedienungs-(SB-)Marktes mit die Produktgruppe(n) der jeweiligen Abteilung betreffenden, produktbezogenen Informationen, die über lokale Sende/Empfangseinheiten in die Abteilungen abgegeben werden.

Ein derartiges Verfahren ist aus EP 0 435 225 bekannt. Zur Durchführung des Verfahrens sind in den einzelnen Abteilungen, d.h. dezentral, lokale Sende/Empfangseinheiten vorgesehen, in denen über fest verlegte Leitungen/Lichtleiter oder auch über Handgeräte nur die Information(en) eingespeichert wird (werden), die für die jeweilige Abteilung und die dort vorgesehenen Produkte/Produktgruppen bestimmt sind.

Die gespeicherten Informationen werden über an Einkaufswagen angebrachte Wiedergabeeinrichtungen optisch und/oder akustisch dem Kunden zur Kenntnis gebracht. Die in den zentralen Sende/Empfangseinheiten gespeicherten Informationen werden beispielsweise von an den Einkaufswagen angebrachten Anregungselementen aktiviert, so daß dann von der jeweiligen Sende/Empfangseinheit die dort gespeicherte(n) Information(en) an den jeweiligen Einkaufswagen abgegeben wird (werden).

Wenn die produktbezogenen Informationen über fest verlegte Leitungen, beispielsweise in Form von Lichtleitern zugeführt werden, erfordert dies schon bei der Installation einen hohen Zeit- und damit Kostenaufwand; ferner ist jede Änderung oder Umgestaltung eines Einkaufsmarktes wiederum sehr zeit- und damit kostenaufwendig. Bei Einspeisung der produktbezogenen Informationen über Handgeräte erfordert dies ebenfalls einen großen Zeitaufwand und obendrein eine hohe Konzentration seitens des Personals, da auf jeden Fall sichergestellt sein muß, daß nur die für die entsprechende Abteilung bestimmten, produktbezogenen Informationen abgespeichert werden.

Aus DE 38 55 178 T2 ist ein Anzeige- und Kommunikationssystem für Einkaufswagen bekannt, bei welchem SB-Märkte einer Handeiskette, vorzugsweise über Satelliten mit allen in dem jeweiligen SB-Markt der Handeiskette interessierenden Informationen versorgt werden. In den einzelnen SB-Märkten können zusätzlich die von der Zentrale der Handelskette erhaltenen Daten mit lokalen marktspezifischen Informationen ergänzt werden.

Die Datenmenge, die zum einen per Funk über Satelliten erhalten worden ist und zum anderen durch lokale Informationen ergänzt worden ist, d.h. die gesamte, auf den jeweiligen Markt zugeschnittene Datenmenge wird mittels eines marktinternen Senders an eine an jedem Einkaufswagen angebrachte Kommunikationselektronik vorzugsweise dann übertragen, wenn ein Einkaufswagen von einem potentiellen Kunden aus einem Einkaufswagen-Parksystem entnommen und in den Bereich dieses marktinternen Senders gebracht wird. Ferner sind bei dem bekannten Kommunikationssystem in den einzelnen Abteilungen bei jeder Produktgruppe und somit dezentral kleine leistungsschwache Triggersender als Kennungsgeber vorgesehen.

Sobald ein potentieller Kunde einen Einkaufswagen in den Bereich eines solchen dezentralen Triggersenders gebracht hat, wird dessen Kommunikationselektronik durch den dezentralen Triggersender aktiviert und gibt anschließend einen für die dort vorhandene Produktgruppe spezifischen Kennungscode ab. Mit Hilfe dieses Kennungscodes wird dann in der großen, in der Kommunikationselektronik jedes Einkaufswagens gespeicherten Datenmenge die Information ausgewählt, welche dem von dem dezentralen Triggersender abgegebenen Kennungscode entspricht. Die produktgruppenspezifische Information wird dann vorzugsweise optisch wiedergegeben, kann jedoch gleichzeitig bzw. stattdessen auch akustisch wiedergegeben werden. Ferner wird in der Kommunikationselektronik jedes Einkaufswagens jeder von einem dezentralen Triggersender abgegebene Kennungscode festgehalten und in einem Speicher abgelegt.

Im Ausgangsbereich jedes SB-Markts, üblicherweise in dessen Kassenbereich werden bei dem bekannten Anzeige- und Kommunikationssystem mittels eines sogenannten Abfragesenders die in jeder Kommunikationselektronik der Einkaufswagen gespeicherten Codes der jeweiligen Triggersender abgefragt. Auf diese Wiese kann dann zum einen in einer dem Abfragesender nachgeschalteten Auswerte- und Analyseeinheit der Weg jedes von einem potentiellen Kunden durch den SB-Markt bewegten Einkaufswagens festgestellt und zum anderen können anhand der Summe dieser Daten Kundenlaufstudien erstellt werden.

Nachteilig bei dem Anzeige- und Kommunikationssystem ist vor allem, daß immer eine sehr große Datenmenge an die Kommunikationseinheit jedes Einkaufswagens übertragen wird und daher eine entsprechend aufwendige und voluminöse Elektronik mit einer entsprechenden Speicherkapazität am Einkaufswagen vorgesehen sein muß.

Aufgabe der Erfindung ist es daher, das Versorgen der verschiedenen Abteilungen eines Selbstbedienungs-(SB-)Marktes mit produktbezogenen Informationen so zu verbessern, daß die für eine ganz bestimmte Abteilung vorgesehene produktbezogene(n) Information(en) ohne nennenswerten Aufwand schnell und zuverlässig übertragen, geändert und/oder ergänzt werden kann (können).

Gemäß der Erfindung ist dies bei einem Verfahren zum Versorgen von Abteilungen eines SB-Marktes durch die Merkmale im Anspruch 1 oder 7 erreicht. Vorteilhafte Weiterbildungen der Erfindung sind Gegenstand der auf den Anspruch 1 bzw. unmittelbar oder mittelbar rückbezogenen Ansprüche.

Gemäß einer ersten bevorzugten Ausführungsform des erfindungsgemäßen Verfahrens wird von mindestens einer zentralen Sendeeinheit des SB-Marktes aus in diesen SB-Markt eine Datenmenge drahtlos übertragen, welche im wesentlichen aus für die Abteilungen des SB-Marktes bestimmten, produktbezogenen Informationen und aus den jeweiligen lokalen Sende/Empfangseinheiten zugeteilten Kennungscodes gebildet ist. Aus der drahtlos übertragenen Datenmenge wird (werden) mittels einer vorzugsweise jeder der lokalen Sende/Empfangseinheiten der jeweiligen Abteilung des SB-Marktes zugeordneten Empfangs/Sendeeinheit anhand des zugeteilten Kennungscodes die für die jeweilige Abteilung bestimmte(n), produktbezogene(n) Information(en) ausgewählt. Aufgrund des zugeteilten Kennungscodes, welcher der produktbezogenen Information vorzugsweise vorangestellt ist, ist somit immer sichergestellt, daß in der jeweiligen Abteilung immer nur für die dort untergebrachte Produktgruppe die entsprechende produktbezogene Information ausgewählt und in einer solchen Form abgelegt, d.h. gespeichert, daß sie von einer lokalen Sende/Empfangseinheit in die jeweilige Abteilung abgegeben werden kann.

Hierbei erfolgt die Abgabe der produktbezogenen Information(en) vorzugsweise über eine definierte Übertragungsstrecke in Form einer Infrarotstrecke; allerdings ist auch eine Übertragung per Ultraschall vorstellbar; in diesem Fall ist dann die lokale Sende/Empfangseinheit für ein Abgeben der produktbezogenen Informationen per Ultraschall ausgelegt.

Wie bereits bei der eingangs an erster Stelle beschriebenen bekannten Lösung wird die produktbezogene Information in Weise bereitgehalten, daß bei Eintreffen eines Einkaufswagens in der Abteilung die Information per Infrarot (Ultraschall) in eine an dem Einkaufswagen angebrachte Empfangs/Sendeeinheit übertragen wird, so daß sie beispielsweise auf einer Wiedergabeeinrichtung der am Einkaufswagen angebrachten Empfangs/Sendeeinheit vorzugsweise optisch, erforderlichenfalls auch akustisch wiedergegeben werden kann.

Gemäß einer bevorzugten Ausführungsform ist die im SB-Markt vorgesehene zentrale Sendeeinheit ein HF-Sender mit im allgemeinen verhältnismäßig niedriger Sendeleistung, so daß die für die einzelnen Abteilungen des SB-Markt bestimmte Datenmenge in digitalisierter Form auf einer der zugelassenen und zugeteilten Funkfrequenzen an in den einzelnen Abteilungen vorgesehene HF-Empfangs/Sendeeinheiten übertragen wird.

Gemäß einer alternativen Ausführungsform der Erfindung kann die für den jeweiligen SB-Markt bestimmte Datenmenge auch über einen Infrarotstrahler ausreichender Leistung übertragen werden, wobei auf die verschiedenen Möglichkeiten einer Übertragung per Infrarot in einem der späteren Abschnitte noch näher eingegangen wird.

Wenn es sich bei dem SB-Markt um einen entsprechend großen Markt handelt, der in mehrere in verhältnismäßig abgeschlossenen Gebäudeteilen untergebrachten Fachmärkten mit jeweils einer Anzahl Abteilungen untergliedert ist und eine Übertragung, beispielsweise aufgrund von ungünstigen örtlichen Gegebenheiten, aus bautechnischen Gründen und ähnlich gearteten Schwierigkeiten nicht zuverlässig gewährleistet ist, sind gemäß einer bevorzugten Weiterbildung der Erfindung in Übergangsbereichen zwischen benachbarten Fachmärkten zusätzliche Empfangs/Sendeeinheiten vorgesehen, in denen erforderlichenfalls auch eine Zwischenverstärkung der drahtlos zu übertragenen Datenmengen durchgeführt wird.

Um Sendeenergie zu sparen und um insbesondere beim Übertragen von Bildern, wozu bekanntlich viel Speicherkapazität benötigt wird, Speicherplatz einzusparen, können gemäß der Erfindung aus der Datenmenge, die von der zentralen Sendeeinheit vorzugsweise in Form eines HF-Senders mit verhältnismäßig geringer Sendeleistung übertragen wird von den Empfangs/Sendeeinheiten der Abteilungen eines ersten Fachmarkts anhand des jeweils zugeteilten Kennungscodes alle die produktbezogenen Information ausgewählt werden, welche die in den Abteilungen des ersten Fachmarkts angebotenen Produkte betreffen. Anschließend werden von der Empfangs/Sendeeinheit, welche in dem Übergangsbereich zwischen dem ersten und einem benachbarten zweiten Fachmarkt untergebracht sind, aus der Datenmenge die produktbezogenen Informationen gelöscht, die bereits in dem ersten Fachmarkt ausgewählt worden sind.

Die verbleibende Datenmenge wird anschließend, falls es erforderlich ist, einer Zwischenverstärkung unterzogen und die entsprechend kleinere Datenmenge wird mit Hilfe der im Übergangsbereich vom ersten zum zweiten Fachmarkt untergebrachten Empfangs/Sendeeinheit in den zweiten Fachmarkt übertragen. In dem zweiten Fachmarkt werden jeweils aus der verbliebenen Datenmenge wiederum die produktbezogenen Informationen ausgewählt und gespeichert, welche Produkte bzw. Produktgruppen betreffen, die in den Abteilungen des zweiten Fachmarkts untergebracht sind. Gleichzeitig werden von der Empfangs/Sendeeinheit die in dem Übergangsbereich zwischen dem zweiten und dem nächsten benachbarten Fachbereich untergebracht ist, aus der empfangenen Datenmenge wieder die in den Abteilungen des zweiten Fachmarkts ausgewählten und abgespeicherten produktbezogenen Informationen gelöscht. Die dadurch noch weiter verkleinerte Datenmenge wird entsprechend verstärkt in den benachbarten Fachmarkt übertragen.

Bei jedem Durchlaufen einer in dem Übergangsbereich von einem in den nächsten angrenzenden Fachmarkt angeordneten Empfangs/ Sendeeinheit wird somit die Datenmenge um die in dem jeweiligen Fachmarkt ausgewählten und abgespeicherten Informationen verringert, so daß in dem letzten Fachmarkt des SB-Marktes die in diesen Fachmarkt übertragene Datenmenge nur die für die Abteilungen des letzten Fachmarktes bestimmten spezifischen Informationen enthält.

Wenn, wie vorstehend bereits ausgeführt, die zentrale Sendeeinheit ein Infrarotstrahler ausreichender Leistung ist, wird die Datenmenge mittels modulierten Infrarotlichts in der Weise übertragen, daß jede der für eine der Abteilungen des SB-Markts bestimmten, produktbezogenen Informationen von dem Infrarotstrahler einzeln und gesondert zumindest an die erste benachbarte IR-Sende/Empfangseinheit übertragen und von dieser erforderlichenfalls an die zweite und weitere benachbarte IR-Sende/Empfangseinheit weitergegeben wird, und zwar solange, bis die gerade übertragene(n) produktbezogene(n) Information in der IR-Sende/Empfangseinheit gespeichert ist, welcher der entsprechende der (den) produktbezogenen Information(en) zugeordnete Kennungscode zugeteilt ist.

Bei dieser Ausführungsform der Erfindung wird die einem Staffettenlauf vergleichbare Weitergabe der einzelnen produktbezogenen Informationen solange durchgeführt, bis alle produktbezogenen Informationen in der für sie bestimmten und durch den Kennungscode gekennzeichneten IR-Sende/Empfangseinheit gespeichert sind. Die auf die vorstehend beschriebene Weise übertragenen und gespeicherten, produktbezogenen Informationen werden dann in derselben Weise bereitgehalten, wie bereits in Verbindung mit der ersten bevorzugten Ausführungsform beschrieben ist, d.h. bei Eintreffen eines Einkaufswagens in einer Abteilung werden die produktbezogenen Informationen über eine Infrarotstrecke in eine an dem Einkaufswagen vorgesehenen IR-Empfangs/Sendeeinheit übertragen und auf deren Wiedergabeeinheit vorzugsweise optisch, erforderlichenfalls jedoch auch akustisch wiedergegeben.

Gerade bei der vorstehend beschriebenen Weitergabe der einzelnen produktbezogenen Informationen über jeweils benachbarte IR-Sende/Empfangseinheiten ist es, um eine sichere und einwandfreie Übertragung und Speicherung der für eine bestimmte Abteilung vorgesehenen, produktbezogenen Informationen belegen und gegebenenfalls beweisen zu können, angebracht, vor einer Übertragung der jeweils nächsten produktbezogenen Information eine Quittierung eines korrekten Empfangs der gerade gesendeten Information in der durch den jeweiligen Kennungscode identifizierten IR-/Sendeeinheit abzuwarten. Eine solche Quittierung könnte dann zweckmäßigerweise ebenfalls wieder mittels Infrarotlicht in umgekehrter Richtung über jeweils benachbarte IR-Sende/Empfangseinheiten der verschiedenen Abteilungen zu einer zentralen, zweckmäßigerweise dem als Sender dienenden Infrarotstrahler zugeordneten Empfangseinheit des SB-Marktes übertragen werden.

Bei Verwenden eines Infrarotstrahlers mit entsprechend hoher Leistung könnte gemäß einer vorteilhaften Weiterbildung der Erfindung jede der für eine der Abteilungen des SB-Markts bestimmten, produktbezogenen Informationen auch einzelnen nacheinander direkt oder indirekt an die über ihren Kennungscode identifizierten IR-Sende/Empfangseinheiten der einzelnen Abteilungen übertragen und dort gespeichert werden. Auch in diesem Fall sollten als Beleg für einen korrekten Empfang der einzelnen produktbezogenen Informationen in den dezentral angeordneten lokalen IR-Sende/Empfangseinheiten entsprechenden Quittierungen zentral gespeichert werden.

Auch bei von einem zentralen HF-Sender auf einer Funkfrequenz übertragenen, produktbezogenen Informationen ist es, auch unter dem Gesichtspunkt den korrekten Empfang der jeweiligen produktbezogenen Information jederzeit belegen zu können, angebracht, daß jeder korrekte Empfang einer produktbezogenen Information in der durch den Kennungscode gekennzeichneten Abteilung durch ein Quittieren bestätigt wird. Auch bei einem in mehrere Fachmärkte unterteilten SB-Markt sollte der korrekte Empfang einer vollständig übertragenen produktbezogenen Information in den Empfangs/Sendeabteilungen der verschiedenen Abteilungen des einzelnen Fachmarkts dadurch bestätigt werden, daß die einzelnen Quittierungen nacheinander in umgekehrter Richtung über die jeweils benachbarten, in den Übergangsbereichen zwischen den einzelnen Fachmärkten vorgesehenen Empfangs/Sendeeinheiten an eine vorzugsweise der zentralen Sendeeinheit zugeordneten oder mit dieser sogar eine Einheit bildenden Empfangs- und Auswerteeinheit übertragen und dort gespeichert werden.

Ferner ist gemäß der Erfindung auch vorgesehen, in den lokalen, d.h. in den einzelnen Abteilungen vorgesehenen IR-Sende/Empfangseinheiten Quittierungen bzw. Quittierungsdateien bezüglich einer einwandfreien Wiedergabe der einzelnen produktbezogenen Informationen auf den Wiedergabeeinrichtungen der in den Einkaufswagen vorgesehenen IR-Empfangs/Sendeeinheiten anzulegen. Diese dezentral angelegten Quittierungsdateien können dann beispielsweise automatisch zu bestimmten Zeiten, insbesondere außerhalb der Geschäftszeiten, beispielsweise nachts, an die der zentralen Sendeeinheit zugeordneten Empfangs- und Auswerteeinheit übertragen werden. Von dort können sie dann beispielsweise auf Abruf, gegebenenfalls auch automatisch leitungsgebunden oder per Funk an eine die korrekte Abgabe von produktbezogenen Informationen überwachende und auswertende Gesellschaft weitergegeben werden.

Gemäß einer weiteren vorteilhaften Ausbildung der Erfindung können die zentralen Sendeeinheiten der einzelnen SB-Märkte leitungsgebunden und/oder per Funk mit neuen, zusätzlichen und/oder auch geänderten produktbezogenen Informationen zusammen mit den entsprechenden Kennungscodes versorgt werden. Auf dieselbe Weise können auch vorzugsweise zentral, jedoch auch dezentral abgelegte und dadurch gespeicherte Quittierungen bzw. Quittierungsdateien auch wieder leitungsgebunden und/oder per Funk abgerufen werden.

Ferner kann gemäß einer bevorzugten Weiterbildung des erfindungsgemäßen Verfahren, beispielsweise synchron oder unabhängig davon mit einer Rückquittierung, mit welcher, wie vorstehend ausgeführt, die korrekte und vollständige Wiedergabe der produktbezogenen Information auf der Empfangs/Sendeeinheit eines Einkaufswagen bestätigt worden ist, mittels Infrarotlicht ein Hinweisgeber aktiviert werden, welcher unmittelbar bei dem beworbenen Produkt angeordnet ist. Ein solcher, bei dem beworbenen Produkt angeordneter Hinweisgeber kann beispielsweise ein über einen Infrarotlichtempfänger aktivierte Leuchtdiode, eine über Infrarotlicht aktiviertes Blitzgerät, ein akustisches Signal u.ä. sein, durch welches das beworbene Produkt mehrmals hintereinander markiert, beispielsweise angeblitzt wird; es kann auch ein durch Infrarotlicht aktiviertes Spotlicht oder jede andere als Hinweisgeber geeignete Maßnahme sein.

Ebenso kann ein solcher Hinweisgeber ebenfalls wieder per Infrarot zeitgleich bereits mit der Abgabe einer produktbezogenen Information von einer dezentralen IR-Sende/Empfangseinheit an eine gerade in die Abteilung gebrachte Empfangs/Sendeeinheit eines Einkaufswagens aktiviert werden.

Nachfolgend wird die Erfindung anhand von bevorzugten Ausführungsformen unter Bezugnahme auf die anliegenden Zeichnungen im einzelnen erläutert. Es zeigen:
- Fig.1: in Draufsicht in stark schematisierter und vereinfachter Form Abteilungen eines Supermarktes;
- Fig.2: wiederum in Draufsicht und in stark schematisierter und vereinfachter Darstellung Abteilungen eines in verschiedene Fachmärkte untergliederten SB-Marktes;
- Fig.3: eine der Fig.1 entsprechende stark schematisierte und vereinfachte Darstellung von Abteilungen eines SB-Marktes, sowie
- Fig.4: eine Übertragung von Information in einer Abteilung an einen dort befindlichen Einkaufswagen.

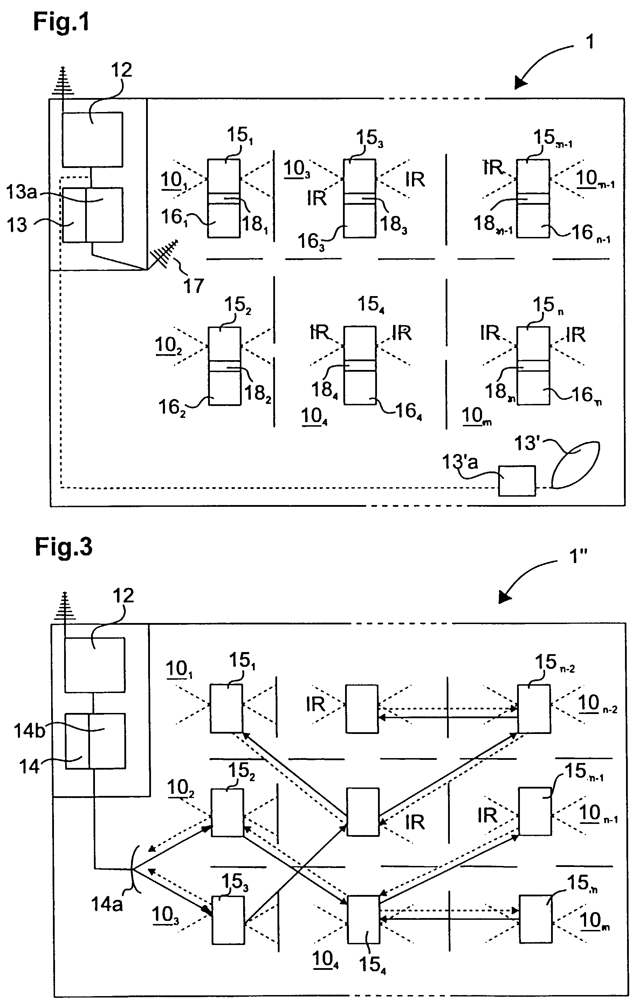

In Fig.1 ist in einem in seiner Gesamtheit mit 1 bezeichneten SB-Markt eine zentrale Computereinheit 12 vorgesehen, in welcher die für den SB-Markt 1 bestimmten Informationen aufbereitet werden können, die per Funk, über Satellit, über eine Fernsprechleitung und damit leitungsgebunden, über ein Modem oder durch geeignete Datenträger an die Computereinheit 12 des SB-Marktes 1 übertragen worden sind. Die Computereinheit 12 ist zur Übertragung von produktbezogenen Informationen ein HF-Sender 13 nachgeordnet, der über eine Antenne 17 auf einer freigegebenen bzw. zugeteilten Funkfrequenz in digitalisierter Form die für einzelne Abteilungen 10₁ bis 10ₘ bestimmte Datenmenge abgibt.

Diese Datenmenge besteht im wesentlichen aus für die einzelnen Abteilungen bestimmten, produktbezogene Informationen und diesen zugeordneten Kennungscodes. Anstelle der Antenne 17 kann zum Abgeben der Information auch ein Parabolspiegel oder jede andere zur Abgabe und Empfang von Funkwellen geeignete Einrichtung verwendet werden.

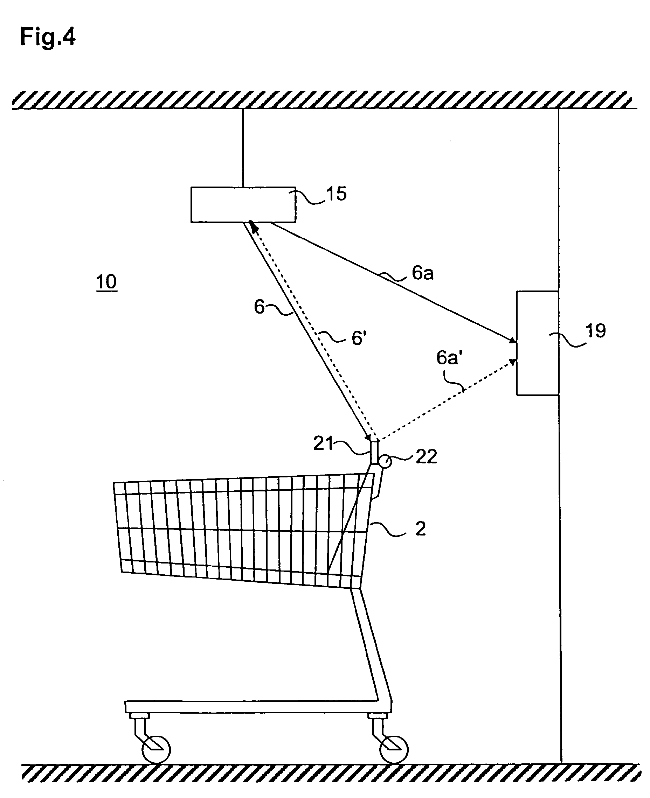

In jeder der Anzahl Abteilungen 10₁ bis 10ₘ ist mindestens eine der Sende/Empfangseinheiten 15₁ bis 15ₙ vorgesehen, von welcher aus per Infrarotlicht jeweils die für diese Abteilung vorgesehene produktbezogene Information an in ihren Bereich gebrachte IR-Empfangs/Sendeeinheiten 21 von Einkaufswagen 2 übertragen wird, wie später anhand von Fig.4 noch im einzelnen beschrieben wird.

Den IR-Sende/Empfangseinheiten 15 der einzelnen Abteilungen 10 ist zum Empfangen einer Funkfrequenz jeweils eine HF-Empfangs/Sendeeinheit 16₁ bis 16ₙ zugeordnet. Aus der von der Antenne 17 abgegebenen Datenmenge wird von jeder der in den einzelnen Abteilungen 10₁ bis 10ₘ vorgesehenen HF-Empfangs/Sendeeinheiten 16₁ bis 16ₙ mit Hilfe des jeder Information zugeordneten Kennungscodes jeweils nur die für die jeweilige Abteilung bestimmte, produktbezogene Information ausgewählt und gespeichert.

Zwischen den HF-Empfangs/Sendeeinheiten 16₁ bis 16ₙ und den IR-Sende/Empfangseinheiten 15₁ bis 15ₙ der jeweiligen Abteilungen 10₁ bis 10ₘ sind jeweils Umsetzeinheiten 18₁ bis 18ₙ vorgesehen, in welchen die auf einer Funkfrequenz erhaltenen, produktbezogenen Informationen in eine mittels IR-Licht übertragbare Form umgesetzt werden. Die Information kann daher per Infrarot, beispielsweise über eine Infrarotstrecke 6 in Fig.4, an die Empfangs/Sendeeinheit 21 jedes gerade in eine Abteilung 10 eintreffenden Einkaufswagens 2 abgegeben werden.

Der korrekte Empfang der für eine der Abteilungen 10 bestimmten produktbezogenen Informationen wird dann in umgekehrter Richtung per Funk an die diesmal als Empfangsantenne wirkende Antenne 17 und von dieser an eine vorzugsweise dem HF-Sender 13 zugeordnete HF-Empfangs- und gegebenenfalls Auswerteeinheit 13a übertragen.

Wie in dem rechten unteren Teil der Fig.1 dargestellt ist, kann die für die Abteilungen 10₁ bis 10ₘ des SB-Marktes 1 bestimmte Datenmenge auch mittels eines entsprechend dimensionierten starken IR-Strahlers 13' ebenfalls in digitalisierter Form abgegeben werden. Die in der marktinternen Computereinheit 12 zur Verfügung gestellten Daten werden dann in einer IR-Aufbereitungseinheit 13a' entsprechend aufbereitet und an den IR-Strahler 13' abgegeben. Da die mittels Infrarotlicht übertragenen Daten unmittelbar von den in jeder Abteilung 10₁ bis 10ₘ vorgesehenen IR-Sende/Empfangseinheiten 15 empfangen werden können, entfallen in diesem Fall die für eine Datenübertragung auf einer Funkfrequenz vorgesehenen HF-Empfangs- und Sendeeinheiten 16₁ bis 16ₙ sowie die Umsetzeinheiten 18₁ bis 18ₙ.

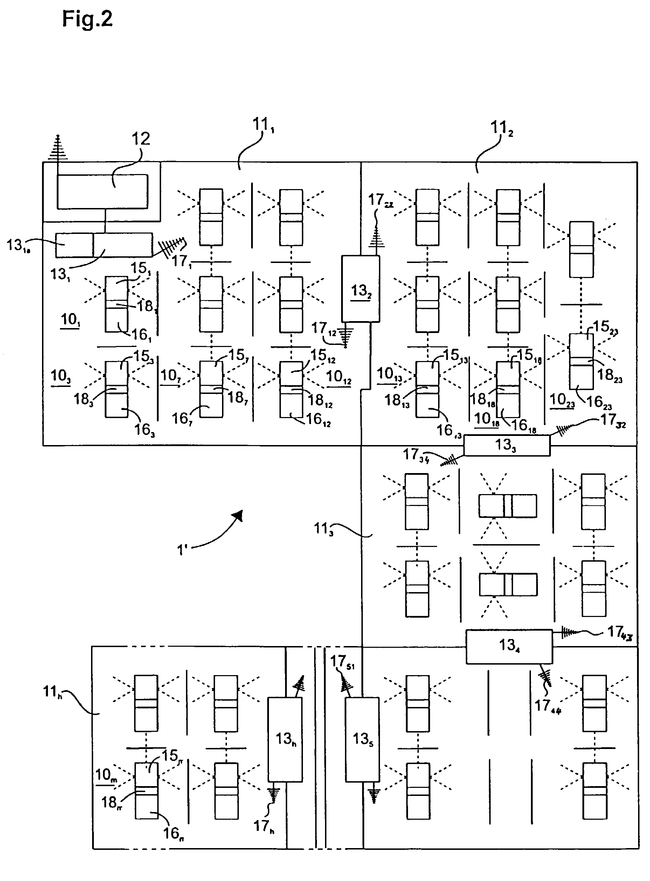

Der in Fig.2 wiedergegebene SB-Markt 1' unterscheidet sich von dem in Fig.2 wiedergegebenen SB-Markt 1 dadurch, daß der SB-Markt 1' in Fig.2 in Fachmärkte 11₁ bis 11ₕ untergliedert ist. In Fig.2 hat der erste Fachmarkt 11₁ beispielsweise Abteilungen 10₁ bis 10_{12,} der zweite Fachmarkt 11₂ beispielsweise Abteilungen 10₁₃ bis 10₂₃ usw. Der SB-Markt 1 hat insgesamt 10'ₘ Abteilungen in Fachmärkten 11ₕ.

In den Übergangsbereichen zwischen den einzelnen Fachmärkten 11₁ bis 11ₕ sind jeweils HF-Empfangs/Sendeeinheiten 13₂ bis 13ₕ vorgesehen, welche jeweils vorzugsweise mit zwei Sende/Empfangsantennen 17 versehen sind, die in zueinander benachbarte Fachmärkte ausgerichtet sind; so ist beispielsweise eine mit der HF-Empfangs/Sendeeinheiten 13₂ verbundene Antenne 17₁₂ in den Fachmarkt 11₁ und die mit derselben Einheit 13₂ verbundene Antenne 17₂₂ in den Fachmarkt 11₂ ausgerichtet.

Mit den HF-Sende/Empfangseinheiten 13₃ und 13₄ sind Sende/Empfangseinheiten 17₃₂, 17₃₄ bzw. 17₄₃, 17₄₄ verbunden. In den Fachmarkt 11ₕ ist eine mit der HF-Zwischenverstärkereinheit 13ₕ verbundene Sende/Empfangsantenne 17ₕ ausgerichtet.

Auch bei dem SB-Markt 1' ist wieder eine Computereinheit 12 vorgesehen, der jedoch im Unterschied zu Fig.1 ein HF-Sender 13₁ verhältnismäßig schwacher Leistung mit einer Sende/Empfangsantenne 17₁ zugeordnet. Über die Antenne 17₁ wird die gesamte, in den SB-Markt 1' zu übertragende Datenmenge abgegeben, welche ebenfalls wieder aus den produktbezogenen Informationen und den Abteilungen zugeordneten Kennungseodes gebildet ist.

Aus der über die Antenne 17₁ abgegebenen Datenmenge werden über beispielsweise den Abteilungen 10₁ bis 10₁₂ zugeordnete HF-Empfangs/Sendeeinheiten 16₁ bis 16₁₂ des Fachmarkts 11₁ die für die jeweilige Abteilung vorgesehene produktbezogene Information ausgewählt und gespeichert. In der im Übergangsbereich zwischen den Fachmärkten 11₁ und 11₂ angeordneten HF-Sende/Empfangseinheit 13₂ werden aus der gesamten, über die Antenne 17₁₂ empfangenen Datenmenge die produktbezogenen Informationen gelöscht, die von den HF-Empfangs/Sendeeinheiten 16₁ bis 16₁₂ der Abteilungen 10₁ bis 10₁₂ ausgewählt und abgespeichert sind.

Die entsprechend reduzierte Datenmenge wird von der Sende/Empfangseinheit 13₂, gegebenenfalls zwischenverstärkt, über die Antenne 17₂₁ in den Fachmarkt 11₂ übertragen. Von den Abteilungs-HF-Empfangs/Sendeeinheiten 16₁₃ bis 16₂₃ im Fachmarkt 11₂ werden dann wiederum die für die entsprechenden Abteilungen 10₁₃ bis 10₂₃ bestimmten produktbezogenen Informationen ausgewählt und abgespeichert. In der in dem Übergangsbereich vom Fachmarkt 11₂ zum Fachmarkt 11₃ angeordneten Sende/Empfangseinheit 13₃ wird die empfangene bereits reduzierte Datenmenge weiter verkleinert, indem die in den AbteilungsHF-Empfangs/Sendeeinheiten 16₁₃ bis 16₂₃ gespeicherten Informationen gelöscht werden.

Diese Reduzierung der Datenmenge setzt sich bis zu der im Übergangsbereich zu dem letzten Fachmarke 11ₕ angeordneten Zwischenverstärkereinheit 13ₕ fort, so daß die dort über die Antenne 17ₕ abgegebene Datenmenge nur noch die produktbezogenen Informationen enthält, die für die Abteilungen in dem Fachmarkt 11ₕ vorgesehen sind.

Der korrekte Empfang der übertragenen produktbezogenen Informationen in den einzelnen Abteilungs-HF-Empfangs/Sendeeinheiten 16₁ bis 16ₙ der einzelnen Fachmärkte 11₁ bis 11ₕ wird dadurch quittiert, daß die Quittierungen auf der Funkfrequenz nacheinander in umgekehrter Richtung über die in den Übergangsbereichen zwischen den benachbarten Fachmärkten 11ₕ bis 11₂ untergebrachten Sende/Empfangseinheiten 13ₕ bis 13₂ bis zu einer vorzugsweise dem HF-Sender 13₁ des ersten Fachmarkts 11₁ zugeordneten SB-Markt-Empfangs- und Auswerteeinheit 13₁ₐ übertragen werden.

Der korrekte Empfang der Übertragung der produktbezogenen Informationen in den einzelnen HF-Empfangs/Sendeeinheiten 16 eines Fachmarkts 11 kann auch über eine bzw. die Funkfrequenz in die diesem Fachmarkt 11 zugeordnete Sende/Empfangseinheit 13 übertragen und in dieser gespeichert werden.

Der in Fig.3 wiedergegebene SB-Markt 1'' entspricht in seinem prinzipiellen Aufbau dem in Fig.1 dargestellten SB-Markt 1. Auch bei dem SB-Markt 1'' ist wieder die Computereinheit 12 vorgesehen, der jedoch im Unterschied zu Fig.1 eine IR-Sende/Empfangseinheit 14 mit verhältnismäßig schwachen Sendeleistung nachgeordnet ist. Von der IR-Sende/Empfangseinheit 14 werden beispielsweise über einen Sende/Empfangsreflektor 14a per Infrarot die für die einzelnen Abteilungen bestimmten, produktbezogenen Informationen nacheinander einzeln abgegeben.

Wie durch eine Anzahl ausgezogener Pfeile angedeutet ist, wird die von der IR-Sende/Empfangseinheit 14 aufbereitete Information in Fig.3 über den Sende/Empfangsreflektor 14a durch entsprechend moduliertes Infrarotlicht, beispielsweise zuerst an die Abteilungs-Sende/Empfangseinheit 10₂ übertragen. Wenn der Kennungscode, welcher der gerade übertragenen produktbezogenen Information zugeordnet ist, mit dem Kennungscode der Abteilungs-Sende/Empfangseinheit 15₂ übereinstimmt, wird die Information in der Einheit 15₂ gespeichert.

Wenn dies nicht der Fall ist, wird die von der SB-Markt-Sende/Empfangseinheit 14 abgegebene Information weitergegeben, beispielsweise von der Abteilungs-Sende/Empfangseinheit 15₂ über die Einheit 15₄ an die Einheit 15ₙ₋₁ usw., und zwar solange, bis der der produktbezogenen Information zugeordnete Kennungscode mit demjenigen einer IR-Sende/Empfangseinheit 15 übereinstimmt.

In dieser IR-Sende/Empfangseinheit 15 wird dann die nur für diese bestimmte produktbezogene Information abgespeichert. Diese Art Staffettenlauf wird nacheinander mit allen produktbezogenen Informationen wiederholt, so daß auf diese Weise alle dezentralen IR-Sende/Einheiten 15₁ bis 15ₙ mit der für sie bestimmten Information versorgt worden sind. Erforderlichenfalls kann jeder der Abteilungs-Sende/Empfangseinheiten 15₁ bis 15ₙ ein IR-Verstärker zugeordnet sein, durch welchen eine per Infrarot erhaltene produktbezogene Information auf einen entsprechenden Pegel verstärkt wird.

Um sicherzustellen, daß jede der Abteilungs-Sende/Empfangseinheiten 15₁ bis 15ₙ die für sie bestimmte Information auch vollständig empfangen hat, wird, wie in Fig.3 durch strichpunktierte Pfeile zwischen den verschiedenen Sende/Empfangseinheiten 15₁ bis 15ₙ angedeutet, eine entsprechende Quittierung in umgekehrter Richtung letztendlich überden Empfangsreflektor 14a an die zentrale IR-Sende/Empfangseinheit 14b übertragen.

In Fig.4 sind in einer Abteilung 10 eine IR-Sende/Empfangseinheit 15 sowie ein Einkaufswagen 2 dargestellt, an dessen Schiebegriff 22 eine nur schematisch angedeutete IR-Empfangs/Sendeeinheit 21 angebracht ist. Ferner ist in Fig.4 ein einer nicht dargestellten Produktgruppe zugeordneter Hinweisgeber 19 schematisch angedeutet.

Nachdem, wie im einzelnen in EP 0 435 225 B1 beschrieben ist, von der IR-Sende/Empfangseinheit 15 festgestellt worden ist, daß die Empfangs/Sendeeinheit 21 des Einkaufswagens 2 in ihren Sendebereich gelangt ist, wird über eine Infrarotstrecke 6 die in der Sende/Empfangseinheit 15 gespeicherte produktbezogene Information an die Empfangs/Sendeeinheit 21 abgegeben. Der einwandfreie und korrekte Empfang wird hierbei über eine gestrichelt wiedergegebene Infrarotstrecke 6' bestätigt. Diese Bestätigung wird in einer Quittierungsdatei der Sende/Empfangseinheit 15 abgespeichert.

Diese in den jeweiligen IR-Sende/Empfangseinheiten 15 gespeicherten Quittierungsdateien können auf einer Funkfrequenz bis zu der Empfangs- und gegebenenfalls Auswerteeinheit 13a des SB-Marktes übertragen werden. Ferner können die in den jeweiligen Abteilungs-IR-Sende/Empfangseinheiten 15 eines Fachmarktes 11 gespeicherten Quittierungsdateien auf einer bzw. der Funkfrequenz an die jedem Fachmarkt zugeordnete Sende/Empfangseinheit übertragen, in dieser gespeichert und gegebenenfalls weitergegeben werden.

Die in den jeweiligen IR-Sende/Empfangseinheiten 15 gespeicherten Quittierungsdateien können auch mittels Infrarotlicht analog dem Staffettenlauf, über welchen der korrekte Empfang der produktbezogenen Informationen bestätigt worden ist, an die Empfangs- und Auswerteeinheit 14b des SB-Marktes 1'' übertragen werden.

Entweder mit der Abgabe einer produktbezogenen Information über die Infrarotstrecke 6 oder auch zeitlich versetzt nach einer solchen Informationsabgabe wird über eine weitere Infrarotstrecke 6a ein einer zu bewerbenden Produktgruppe zugeordneter Hinweisgeber 19 aktiviert, um dadurch einem potentiellen Käufer ein Auffinden der beworbenen Produktgruppe zu erleichtern. Eine Aktivierung des Hinweisgebers 18 kann auch etwa zeitlich mit der über die Infrarotstrecke 6' erfolgenden Bestätigung einer korrekten Wiedergabe der produktbezogenen Information auf der Empfangs/Sendeeinheit 21 über eine Infrarotstrecke 6a' bewirkt werden.

### Bezugszeichenliste

- 1, 1', 1'': SB-Markt
- 10₁ bis 10ₘ: Abteilungen
- 11₁ bis 11ₕ: Fachmärkte
- 12: Computereinheit
- 13: HF-Sender
- 13': IR-Strahler
- 13₁: HF-Sender verhältnismäßig schwacher Leistung
- 13₁ₐ: SB-Markt-Empfangs-/Auswerteeinheit
- 13₂ bis 13ₕ: Empfangs/Sendeeinheit mit Zwischenverstärkung
- 13a: HF-Empfangs-/Auswerteeinheit
- 13a': IR-Aufbereitungseinheit
- 14: SB-Markt-Sendeeinheit
- 14a: Sende/Empfangsreflektor
- 14b: SB-Empfangs- und Auswerteeinheit
- 15₁ bis 15ₙ: IR-Sende/Empfangseinheiten
- 16₁ bis 16ₙ: HF-Empfangs/Sendeeinheiten
- 17: Antenne
- 17₁ bis 17ₕ: Sende/Empfangsantennen
- 18₁ bis 18ₙ: Umsetzeinheiten
- 19: Hinweisgeber
- 2: Einkaufswagen
- 21: IR-Empfangs/Sendeeinheiten
- 22: Schiebegriff
- 6, 6', 6a, 6a': IR-Strecken

## Patentansprüche

1. Verfahren zum Versorgen von mit unterschiedlichen Produktgruppen ausgestatteten Abteilungen eines mit einer Vielzahl Einkaufswagen bestückten SB-Marktes mit die Produktgruppe(n) der jeweiligen Abteilung betreffenden, produktbezogenen Informationen, die über lokale Sende/Empfangseinheiten in die Abteilungen abgegeben werden, wobei die folgenden Schritte durchgeführt werden:
a) von mindestens einer zentralen Sendeeinheit (13; 13₁) des SB-Marktes (1; 1') wird in den SB-Markt (1; 1') eine Datenmenge drahtlos übertragen, welche im wesentlichen aus für die Abteilungen (10₁ bis 10ₘ) des SB-Marktes (1; 1') bestimmten, produktbezogenen Informationen und aus den jeweiligen lokalen Sende/Empfangseinheiten (15₁ bis 15ₙ) zugeteilten Kennungscodes gebildet ist;
b) aus der drahtlos übertragenen Datenmenge wird (werden) mittels einer vorzugsweise jeder lokalen Sende/Empfangseinheit (15₁ bis 15ₙ) der jeweiligen Abteilung des SB-Marktes (13; 13₁) zugeordneten Empfangs/Sendeeinheit (16₁ bis 16ₘ) anhand des zugeteilten Kennungscodes die für die jeweilige Abteilung bestimmte(n), produktbezogene(n) Information(en) ausgewählt;
c) die ausgewählte(n), produktbezogene(n) Information(en) wird (werden) in der jeweiligen, lokalen Sende/Empfangseinheit (15₁ bis 15ₙ), vorzugsweise in Form einer IR-Sende/Empfangseinheit gespeichert und in der Weise bereitgehalten, daß bei Eintreffen eines Einkaufswagens (2) in einer Abteilung (10) produktbezogene(n) Information(en) über eine definierte Übertragungsstrecke, vorzugsweise eine Infrarotstrecke (6) an eine an dem Einkaufswagen (2) vorgesehene Empfangs/Sendeeinheit (21), vorzugsweise in Form einer IR-Empfangs/Sendeeinheit mit Wiedergabeeinrichtung übertragen und dort wiedergegeben wird (werden).

2. Verfahren nach Anspruch 1, dadurch **gekennzeichnet**, daß die Datenmenge mittels der mindestens einen zentralen Sendeeinheit in Form eines im SB-Markt (1; 1') installierten HF-Senders (13; 13₁)) auf einer Funkfrequenz in digitalisierter Form übertragen wird.

3. Verfahren nach Anspruch 1 und/oder 2, dadurch **gekennzeichnet**, daß der korrekte Empfang jeder vollständigen produktbezogenen Information von der mindestens einen jeder Abteilung zugeordneten Empfangs/Sendeeinheit (16₁ bis 16ₘ) auf einer, vorzugsweise der Funkfrequenz an der mindestens einen Sendeeinheit (1, 1') quittiert wird.

4. Verfahren nach einem der Ansprüche 1 bis 3, wobei der SB-Markt (1') in mehrere Fachmärkte (11₁ bis 11ₕ) mit jeweils einer Anzahl Abteilungen (10) untergliedert ist, dadurch **gekennzeichnet**, daß in Empfangs/Sendeeinheiten (13₂ bis 13ₕ), die in Übergangsbereichen zwischen benachbarten Fachmärkten (11₁ bis 11ₕ) vorgesehen sind, eine Zwischenverstärkung der drahtlos zu übertragenen Datenmenge durchgeführt wird.

5. Verfahren nach einem der Ansprüche 1 bis 4, dadurch **gekennzeichnet**, daß
b₁) aus der von der mindestens einen zentralen Sendeeinheit (13₁) übertragenen Datenmenge von mindestens einer Empfangs/Sendeeinheit (16) jeder der Abteilungen (10) eines ersten Fachmarktes (11₁) anhand der zugeteilten Kennungscodes die für den ersten Fachmarkt bestimmten, produktbezogenen Informationen ausgewählt, umgesetzt und gespeichert werden;
b₂) in der im Übergangsbereich zwischen dem ersten (11₁ ) und einem benachbarten (zweiten) Fachmarkt (11₂) vorgesehenen Empfangs/Sendeeinheit (13₂) aus der Datenmenge die bereits in dem vorherigen (ersten) Fachmarkt (11₁) ausgewählten produktbezogenen Informationen gelöscht werden und anschließend gegebenenfalls eine Zwischenverstärkung der verbliebenen Daten durchgeführt wird;
b₃) die entsprechend kleinere Datenmenge mit Hilfe der Empfangs/Sendeeinheit (13₂) in den zweiten Fachmarkt (11₂) übertragen wird;
b₄) von Empfangs/Sendeeinheiten (16) in den Abteilungen (10) des zweiten Fachmarkts (11₂) jeweils anhand der Kennungscodes die für den zweiten Fachmarkt (11₂) bestimmten, produktbezogenen Informationen ausgewählt, umgesetzt und gespeichert werden, und
b₅) analog den Schritten b₂) bis b₄) von jeweils im Übergangsbereich zwischen weiteren benachbarten Fachmärkten (11₃ bis 11ₕ) vorgesehenen Empfangs/Sendeeinheiten (13₃ bis 13ₕ) die von Fachmarkt zu Fachmarkt kleiner werdende Datenmenge an die Empfangs/Sendeeinheiten (16) der jeweiligen Abteilungen (10) in den restlichen Fachmärkten (11₃ bis 11ₕ) übertragen wird.

6. Verfahren nach Anspruch 5, dadurch **gekennzeichnet**, daß Quittierungen eines korrekten Empfangs der vollständig übertragenen, produktbezogenen Informationen in den Empfangs/Sendeeinheiten (16) der Abteilungen (10) der einzelnen Fachmärkte (11₁ bis 11ₕ) nacheinander in umgekehrter Richtung über die jeweils benachbarten, im Übergangsbereich zwischen den einzelnen Fachmärkten (11₁ bis 11ₕ) vorgesehenen Empfangs/Sendeeinheiten (13₂ bis 13ₕ) an eine Empfangs- und Auswerteeinheit (13₁ₐ) der zentralen Sendeeinheit (13₁) übertragen, dort gespeichert und/oder von dort weitergegeben werden.

7. Verfahren zum Versorgen von mit unterschiedlichen Produktgruppen ausgestatteten Abteilungen eines mit einer Vielzahl Einkaufswagen bestückten SB-Marktes mit die Produktgruppe(n) der jeweiligen Abteilung betreffenden, produktbezogenen Informationen, die über lokale IR-Sende/Empfangseinheiten in die Abteilungen abgegeben werden wobei die folgenden Schritte durchgeführt werden:
a₁) jede der für eine der Abteilungen (10) des SB-Marktes (1 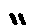 ) bestimmten, produktbezogenen Informationen wird jeweils mittels Infrarotlicht einzeln und damit gesondert von einer zentralen IR-Sende/Empfangseinheit (14) des SB-Marktes (1 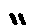 ) an mindestens die erste benachbarte IR-Sende/Empfangseinheit (15) übertragen und wird
a₂) von dieser erforderlichenfalls an die zweite und weitere der ersten bzw. zweiten Einheit benachbarte IR-Sende/Empfangseinheiten (15) solange weitergegeben, bis die gerade übertragene(n) produktbezogene(n) Information(en) in der IR-Sende/Empfangseinheit (15) mit dem entsprechenden Kennungscode gespeichert wird (werden),
d) diese einem Staffettenlaut vergleichbare Weitergabe der einzelnen produktbezogenen Informationen wird bezüglich aller übrigen produktbezogenen Informationen jeweils einzeln nacheinander durchgeführt, und
c') die gespeicherte(n) produktbezogene(n) Information(en) wird (werden) in der Weise bereitgehalten, daß bei Eintreffen eines Einkaufswagens (2) in einer Abteilung (10) produktbezogene(n) Information(en) über eine Infrarotstrecke (6) an eine an dem Einkaufswagen (2) vorgesehene IR-Empfangs/Sendeeinheit (21) mit Wiedergabeeinrichtung übertragen und dort wiedergegeben wird (werden).

8. Verfahren nach Anspruch 8, dadurch **gekennzeichnet**, daß
a₃) nach dem Schritt a₂) vor einer Übertragung der nächsten produktbezogenen Information eine Quittierung eines korrekten Empfangs der gerade vollständig übertragenen Information in der durch den Kennungscode identifizierten IR-Sende/Empfangseinheit (15) mittels Infrarotlicht in umgekehrter Richtung über die benachbarten IR-Sende/Empfangseinheiten (15) der verschiedenen Abteilungen an eine zentrale Empfangs- und Auswerteeinheit (14b) des SB-Marktes (1 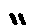 ) übertragen wird.

9. Verfahren nach den Ansprüchen 7 oder 8, dadurch **gekennzeichnet**, daß anstelle der Schritte a₁), a₂) und d)
a₄) jede der für eine der Abteilungen (10) des SB-Marktes (1 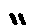 ) bestimmten, produktbezogenen Informationen mittels eines starken Infrarot-Strahlers (13') einzeln nacheinander direkt oder indirekt an die über ihren Kennungsscode identifizierten IR-Sende/Empfangseinheiten (15) der Abteilungen (10) übertragen wird und dort gespeichert wird, und
b') die Quittierungen eines korrekten Empfangs der produktbezogenen Informationen in den IR-Sende/Empfangseinheiten (15) jeweils analog Schritt a₃) erfolgen.

10. Verfahren nach einem der vorhergehenden Ansprüche, dadurch **gekennzeichnet**, daß in den lokalen Sende/Empfangseinheiten in Form von vorzugsweise IR-Sende/Empfangseinheiten (15) der verschiedenen Abteilungen (10) Quittierungen/Quittierungsdateien bezüglich einer einwandfreien Wiedergabe der produktbezogenen Informationen der Wiedergabeeinrichtung der an den Einkaufswagen (2) vorgesehenen Empfangs/Sendeeinheiten, vorzugsweise in Form von IR-Empfangs/Sendeeinheiten (21) registriert werden.

11. Verfahren nach einem der Ansprüche 1 bis 6, dadurch **gekennzeichnet**, daß in den lokalen, vorzugsweise IR-Sende/Empfangseinheiten (15) der Abteilungen (10) gespeicherte Quittierungsdateien bezüglich jeder korrekten und vollständigen Wiedergabe der produktbezogenen Informationen der Wiedergabeeinrichtung der vorzugsweise IR-Empfangs/Sendeeinheiten (21) der Einkaufswagen (2) nach einer Umsetzung (18) über die jeweiligen, für drahtlosen Empfang ausgelegten Empfangs/Sendeeinheiten (16) der Abteilungen (10) auf einer oder der Funkfrequenz an eine zentrale Empfangs- und Auswerteeinheit (13a) des SB-Marktes (1) übertragen werden.

12. Verfahren nach Anspruch 5, dadurch **gekennzeichnet**, daß in den vorzugsweise IR-Sende/Empfangseinheiten (15) der Abteilungen (10) der Fachmärkte (11₂ bis 11ₕ) gespeicherte Quittierungsdateien bezüglich jeder korrekten und vollständigen Wiedergabe der produktbezogenen Informationen der Wiedergabeeinrichtung der an Einkaufswagen (2) vorgesehenen IR-Empfangs/Sendeeinheiten (21) nach einer Umsetzung (18) über die für drahtlose Übertragung ausgelegten Empfangs/Sendeeinheiten (16) an die in den Übergangsbereichen der Fachmärkte (11₁ bis 11ₕ) vorgesehenen Empfangs/Sendeeinheiten (13₂ bis 13ₕ) übertragen und entweder in diesen gespeichert oder von dort an die zentrale Empfangs- und Auswerteeinheit (13₁ₐ) des SB-Markt (1') übertragen und in dieser gespeichert werden.

13. Verfahren nach den Ansprüchen 7 und 8, dadurch **gekennzeichnet**, daß in den IR-Sende/Empfangseinheiten (15) gespeicherte Quittierungsdateien bezüglich jeder korrekten und vollständigen Wiedergabe von produktbezogenen Informationen der Wiedergabeeinrichtung von an Einkaufswagen (2) vorgesehenen Empfangs/Sendeeinheiten (21) mittels Infrarotlicht direkt oder indirekt analog Schritt a₃) an eine zentrale Empfangs- und Auswerteeinheit (14b) des SB-Marktes (1 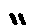 ) übertragen werden.

14. Verfahren nach einem der vorhergehenden Ansprüche, dadurch **gekennzeichnet**, daß die zentrale(n) Sendeeinheit(en) (13; 13'; 13₁; 14) des SB-Marktes (1; 1'; 1 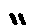 ) leitungsgebunden oder per Funk mit neuen, zusätzlichen und/oder geänderten produktbezogenen Informationen und/oder den entsprechenden Kennungscodes versorgt werden.

15. Verfahren nach einem der vorhergehenden Ansprüche, dadurch **gekennzeichnet**, daß Quittierungen/Quittierungsdateien, welche vorzugsweise in der (den) zentralen Empfangseinheit(en) (13a; 13'a; 13_{1a'}; 14b) gespeichert sind, leitungsgebunden oder per Funk abgerufen werden.

16. Verfahren nach einem der vorhergehenden Ansprüche, dadurch **gekennzeichnet**, daß mit jeder Quittierung einer korrekten und vollständigen Wiedergabe von produktbezogenen Informationen mittels der an Einkaufswagen (2) vorgesehenen IR-Empfangs/Sendeeinheiten (21) über eine Infrarotstrecke (6a') an die entsprechenden IR-Sende/Empfangseinheiten (15) der Abteilungen (10) von diesen aus ein bei dem durch die wiedergegebene Information beworbenen Produkt angeordneter Hinweisgeber (19) aktiviert wird.

17. Verfahren nach einem der Ansprüche 1, 8 bis 14, dadurch **gekennzeichnet**, daß gleichzeitig mit der von einer IR-Sende/Empfangseinheit (15) an eine IR-Empfangs/Sendeeinheit (21) eines Einkaufswagens (2) übertragenen produktbezogenen Information über eine Infrarotstrecke (6a) ein bei dem durch diese Information beworbenen Produkt angeordneter Hinweisgeber (19) aktiviert wird.
